# EUROPEAN PATENT APPLICATION

(11) **EP 2 682 663 A1**
(43) Date of publication of application: **08.01.2014**
(21) Application number: 12752902.2
(22) Date of filing: 29.02.2012
(51) Int. Cl.: F16T 1/36, H01M 2/12, H01M 8/04, H01M 8/10

(54) **GAS-LIQUID SEPARATOR AND FUEL CELL SYSTEM**

(30) Priority: 03.03.2011 JP 2011046176
(71) Applicant: Panasonic Corporation, Kadoma-shi Osaka 571-8501 (JP)
(72) Inventor: SANO, Hideharu, 2-1-61, Shiromi, Chuo-ku, Osaka 540.6207 (JP)
(74) Representative: Grünecker, Kinkeldey, Stockmair & Schwanhäusser
(86) International application number: PCT/JP2012/001376
(87) International publication number: WO 2012/117725

(57) **Abstract**

A gas-liquid separator includes a main body (13) including a bottom face portion, (10) and a tubular side wall (12), one end of the side wall (12) being connected to the bottom face portion (10), the other end of the side wall (12) including a first opening (11), a lid (16) disposed so as to cover the first opening (11) and including a gas inlet port (14) and a gas outlet port (15), and a tubular separating wall (18) disposed inside the side wall (12), one end of the separating wall (18) being connected to the lid (16), the other end of the separating wall (18) including a second opening (17). A gap is provided between the bottom face portion (10) and an end portion on the side of the second opening (17) of the separating wall (18), and the side wall (12) includes a water outlet port (20) provided at a location higher with respect to a vertical direction than the end portion on the side of the second opening (17).

## Description

### TECHNICAL FIELD

The present invention relates to a gas-liquid separator used in a fuel cell system that performs electric power generation by an electrochemical reaction between a fuel gas and an oxidizing gas that are supplied to a fuel cell.

### BACKGROUND ART

Development of solid polymer electrolyte fuel cell systems has been actively pursued as a suitable type of fuel cell cogeneration system for home use (hereinafter referred to as "fuel cell system"). However, the infrastructure for the supply of hydrogen used as the fuel has not yet been built sufficiently. For this reason, a hydrogen-rich fuel gas is generated by reforming a raw material, such as city gas (the gas supplied in cities using pipes), LP gas, and kerosene, by a hydrogen generator. Then, using the generated hydrogen and the oxygen in the air, they are caused to react in a solid polymer electrolyte fuel cell (hereinafter referred to as a "fuel cell") to generate electric power, and the heat produced by the reaction is collected and stored in the form of hot water in a hot water tank. The hot water stored in the hot water tank is effectively utilized for heat supplying to outside. Such a fuel cell system has been developed.

Such a fuel cell system is known in which a hydrogen generator and a fuel cell are enclosed in a package so as to generate electric power by utilizing, tor example, city gas (for example, see Patent Literature 1).

In the fuel cell, a hydrogen rich fuel gas is used as an anode gas, and the air is used as a cathode gas. The anode off gas and cathode off gas after electric power generation contain a large amount of water. For this reason, a gas-liquid separator is disposed in the anode off gas passage and the cathode off gas passage so as to separate water and off gas from the anode off gas and the cathode off gas, and the separated water is stored in a tank and is supplied to a hydrogen generator so that it can be used in a hydrogen generation process.

As a configuration of this gas-liquid separator, a gas-liquid separator is known in which an off gas inlet and an off gas outlet are provided in an upper portion of a hermetically-sealed tank, a condensed water outlet and a discharge water valve are provided in a lower portion of the tank, and a water level sensor for monitoring a water level is provided in the tank (for example, see Patent Literature 2).

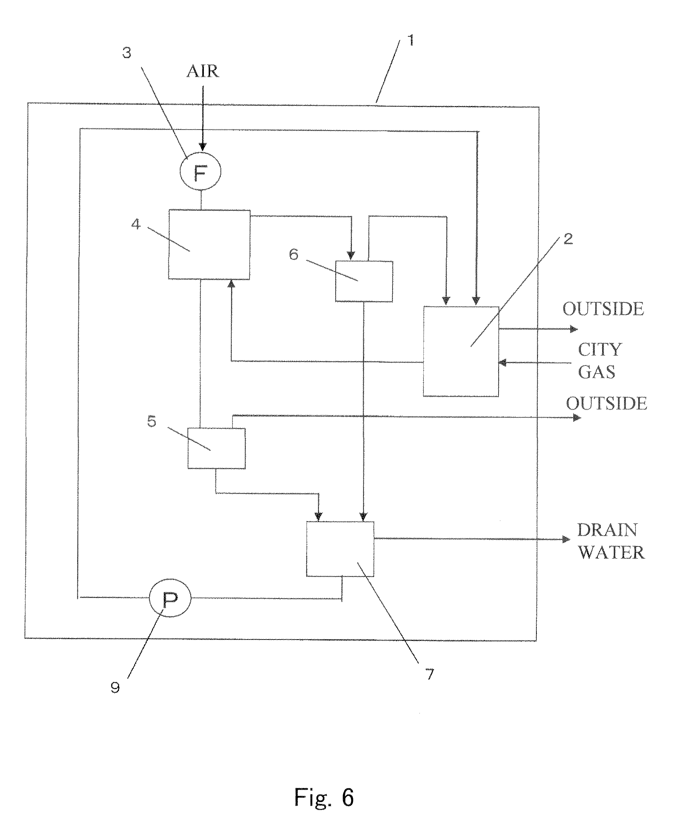

Fig. 6 is a configuration diagram illustrating the configuration of the conventional fuel cell system described in Patent Literature 1.

As illustrated in Fig. 6, the interior of the casing 1 contains a hydrogen generating device 2 that generates a hydrogen-rich fuel gas from a raw material and water, a fuel cell 4 that performs electric power generation using the fuel gas obtained by the hydrogen generating device 2 and air supplied by an air pump 3, a cathode gas-liquid separator 5 that separates water from a cathode off gas discharged from the fuel cell 4, an anode gas-liquid separator 6 that separates water from an anode off gas discharged from the fuel cell 4, a condensed water tank 7 that stores condensed water collected from the cathode gas-liquid separator 5 and the anode gas-liquid separator 6, and a reforming water pump 9 that supplies the condensed water in the condensed water tank 7 to the hydrogen generating device 2.

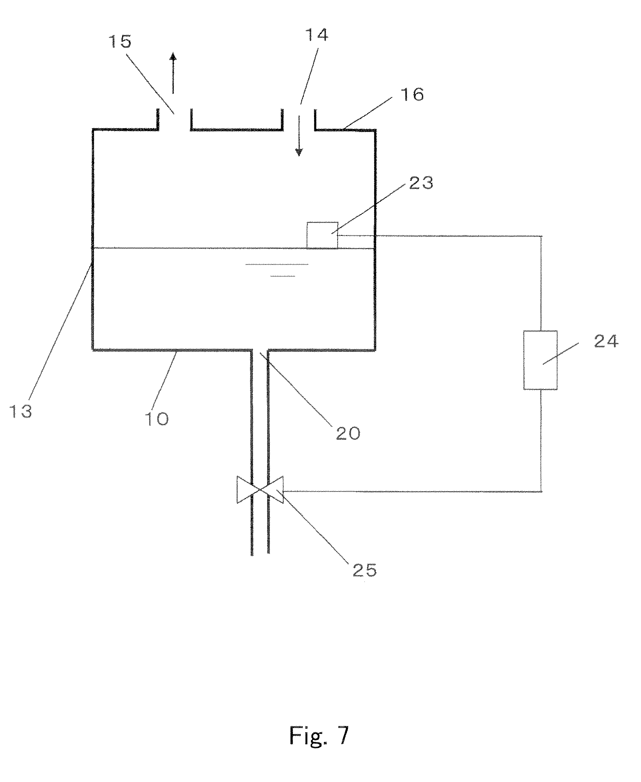

Fig. 7 is a configuration diagram illustrating the configuration of the gas-liquid separator described in Patent Literature 2. As illustrated in Fig. 7, a cathode gas-liquid separator 5 includes a main body 13 including a bottom face portion 10, a lid 16 including an gas inlet port 14 and a gas outlet port 15, a water outlet port 20 provided in the bottom face portion 10, a water drain valve 25 provided on a passage of the water discharged from the water outlet port 20, a water level sensor 23 provided in the main body 13, a control unit 24 that controls the water drain valve 25 based on a signal from the water level sensor 23, and a lid 16 disposed so as to cover a first opening 11 and including an gas inlet port 14 and a gas outlet port 15. The control unit 24 controls the water drain valve 25 so as to drain the condensed water stored in the main body when the water level sensor 23 detects that the water level in the main body 13 reaches a certain level.

### CITATION LIST

### Patent Literature

Patent Literature 1: Japanese Unexamined Patent Publication No. 2009-104832
Patent Literature 2: Japanese Unexamined Patent Publication No. 2007-115485

### SUMMARY OF INVENTION

### TECHNICAL PROBLEM

In the above-described conventional configuration, the cathode off gas is guided to the gas inlet port of the lid, then the water contained in the cathode off gas is separated and stored in the main body, and the cathode off gas from which water has been separated is discharged from the gas outlet port. However, in order to prevent the cathode off gas guided into the gas-liquid separator from leaking out of the gas-liquid separator, it is necessary to ensure hermeticity of the junction portion of the main body and the lid. For this reason, the conventional configuration employs a structure in which the main body and the lid are fastened by intimately fixing them using a technique such as welding and adhesion, or a structure that ensures the sealing performance by sandwiching a sealing material such as packing or an 0 ring between the main body and the lid and screw-fastening the main body and the lid.

The former structure, in which the main body and the lid are fastened by intimately fixing them using a technique such as welding and adhesion, cannot separate the lid and the main body from each other easily. Consequently, a problem with this structure is that, at the time of maintenance, it is difficult to remove the stain that has been deposited in the interior of the main body or the stain that has been attached to the inner wall of the main body over long-term use. Another problem is that it is difficult to repair or replace the sensors and the like in the main body.

With the latter structure, the lid and the main body can be separated because the sealing performance is ensured by sandwiching a sealing material such as packing or an O ring between the main body and the lid and screw-fastening the main body and the lid. As a result, this structure offers easy maintenance because it is easy to remove the stain that has been deposited that has been deposited in the interior of the main body or the stain that has been attached to the inner wall of the main body at the time of maintenance.

In this case, however, in order to ensure the sealing performance between the main body and the lid, the attaching/removing work of the lid tends to become complicated. For example, there may be a case that the sealing performance between the main body and the lid is inappropriate because of rough attaching/removing work of the lid. In that case, due to the pressure ditrerence between the pressure of the gas inside the main body and the pressure of the gas outside the main body, one of the gases may flow out or flow in from the junction portion of the lid and the main body, and as a consequence, a problem arises that the two gases mix with each other (in other words, hemieticity cannot be ensured).

Moreover, the configurations of the packing, the 0 ring, and the screws, which are the constituent elements for ensuring the sealing performance, are complicated, which becomes a cause of higher costs.

The present invention solves the foregoing problems in prior art, and it is an object of the invention to provide a gas-liquid separator that can achieve efficient attaching/removing work of the lid and simplification of the device configuration while ensuring good hermeticity and easy maintenance.

### SOLUTION TO PROBLEM

In order to solve the foregoing problems, a gas-liquid separator of the present invention includes:
a main body including a bottom face portion and a tubular side wall, one end of the side wall being connected to the bottom face portion, the other end of the side wall including a first opening;
a lid disposed so as to cover the first opening and including a gas inlet port and a gas outlet port; and
a tubular separating wall disposed inside the side wall, one end of the separating wall being connected to the lid, the other end of the separating wall including a second opening, wherein:
   a gap is provided between the bottom face portion and an end portion on the side of the second opening of the separating wall; and the side wall includes a water outlet port provided at a location higher with respect to a vertical direction than the end portion on the side of the second opening.

With this, a hermetically closed space is formed by the lid, the separating wall, and the water stored in the main body to ensure the hermeticity for the off gas that passes through the inside of the gas-liquid separator. As a result, because the hermeticity at the junction portion of the lid and the main body is made unnecessary, in a gas-liquid separator in which the lid and the main body are separable, the structure of the lid and the main body is allowed to be a seal-less structure, which does not use packing, an O ring, or the like. Accordingly, it is possible to obtain a gas-liquid separator that achieves efficient attaching/removing work of the lid and simplification of the device configuration.

### ADVANTAGEOUS EFFECTS OF INVENTION

The present invention enables the structure of the lid and the main body to be a seal-less structure, which does not use packing, an O ring, or the like. Therefore, it is possible to obtain a gas-liquid separator that can achieve efficient attaching/removing work of the lid and simplification of the device configuration.

### BRIEF DESCRIPTION OF DRAWINGS

[Fig. 1] Fig. 1 is a configuration diagram illustrating an example of a fuel cell system of Embodiment 1.
[Fig. 2] Fig. 2 is a cross-sectional view illustrating an example of a gas-liquid separator of Embodiment 1.
[Fig. 3] Fig. 3 is a cross-sectional view illustrating an example of a main body of the gas-liquid separator of Embodiment 1.
[Fig. 4] Fig. 4 is a cross-sectional view illustrating an example of a lid used for the gas-liquid separator of Embodiment 1, which includes a separating wall.
[Fig. 5] Fig. 5 is a cross-sectional view illustrating an example of a gas-liquid separator of a modified example of Embodiment 1.
[Fig. 6] Fig. 6 is a configuration diagram of a conventional fuel cell system.
[Fig. 7] Fig. 7 is a cross-sectional view of a conventional gas-liquid separator.

### DESCRIPTION OF EMBODIMENTS

A gas-liquid separator according to a first aspect of the invention includes: a main body including a bottom face portion and a tubular side wall, one end of the side wall being connected to the bottom face portion, the other end of the side wall including a first opening; a lid disposed so as to cover the first opening and including a gas inlet port and a gas outlet port; and a tubular separating wall disposed inside the side wall, one end of the separating wall being connected to the lid, the other end of the separating wall including a second opening, wherein a gap is provided between the bottom face portion and an end portion on the side of the second opening of the separating wall; and the side wall includes a water outlet port provided at a location higher with respect to a vertical direction than the end portion on the side of the second opening.

With this, a hermetically closed space can be formed by the lid, the separating wall, and the water stored in the main body to ensure the hem1cticity for the off gas that passes through the inside of the gas-liquid separator. As a result, the hermeticity at the junction portion of the lid and the main body is made unnecessary, and in a gas-liquid separator in which the lid and the main body are separable, the structure of the lid and the main body is allowed to be a seal-less structure, which does not use packing, an O ring, or the like. Accordingly, it is possible to obtain a gas-liquid separator that achieves efficient attaching/removing work of the lid and simplification of the device configuration. Moreover, because of the simplification of the device configuration, the cost of the gas-liquid separator can be reduced.

Here, the tubular side wall and the tubular separating wall may have either a round shape, such as a perfect circular shape or an elliptical shape, or a polygonal shape, such as a quadrilateral shape, in their cross-sectional shape perpendicular to the axial direction thereof.

According to a second aspect of the invention, a junction portion between the main body and the lid is disposed outwardly relative to the separating wall when viewed from the vertical direction, in the gas-liquid separator according to the first aspect of the invention.

With this, because the junction portion of the main body and the lid does not receive the internal pressure of the gas supplied from the gas inlet port, it is possible to prevent the gas inside the main body and the gas outside the main body from being mixed with each other.

According to a third aspect of the invention, a gap is provided between the side wall and the separating wall, in the gas-liquid separator according to the first or second aspect of the invention.

With this, because the gap provided between the side wall and the separating wall serves as a heat insulation layer, it is possible to suppress the heat dissipation loss resulting from the release of heat of the water stored inside the main body to outside of the gas-liquid separator. This prevents the temperature drop of the water in the gas-liquid separator and reduces the amount of heating at the time when the water is used by the hydrogen generating device. As a result, the operation efficiency of the fuel cell system can be improved.

According to a fourth aspect of the invention, the first opening is provided so as to open gravitationally upward so that a water surface of water in the main body becomes horizontal, in the gas-liquid separator according to any one of the first through third aspects of the invention.

With this, the distance between the water surface of the water in the main body and the upper end of the side wall is kept constant over the entire circumference of the side wall. Therefore, even when the water level of the condensed water in the main body rises, the water in the main body can be prevented from leaking out of the gas-liquid separator from a portion of the upper end of the side wall.

Note that it is assumed that the gravitational force acts vertically from above downward.

According to a fifth aspect of the invention, the second opening is provided so as to open gravitationally downward so that a water surface of water in the main body becomes horizontal, in the gas-liquid separator according to any one of the first through fourth aspects of the invention.

With this, the distance between the lower end of the separating wall provided on the lid and the water surface of the water stored in the main body becomes equal over the entire circumference of the separating wall. Therefore, even when the water level of the water in the main body lowers, the off gas can be prevented from leaking out from a portion of the separating wall, and the hermeticity of the space formed by the lid, the separating wall, and the water stored in the main body can be ensured.

According to a sixth aspect of the invention, the gas inlet port and the gas outlet port are provided inwardly relative to the junction portion of the lid and the separating wall in the gas-liquid separator according to any one of the first through fifth aspects of the invention.

With this, because the off gas passes through the inner side of the separating wall, the side wall and the separating wall serve as the heat insulation walls to suppress the heat dissipation amount of the off gas, and the temperature of the off gas can be kept high.

According to a seventh aspect of the invention, a fuel cell system includes: a fuel cell configured to generate electric power using a fuel gas and air; and a gas-liquid separator configured to separate water from unreacted gas discharged from the fuel cell, and the gas-liquid separator is a gas-liquid separator according to any one the first through sixth aspect of the invention.

With this, the overall configuration of the fuel cell system can be simplified using the simplified gas-liquid separator including the lid and the main body with a seal-less structure, which does not use packing, an O ring, or the like.

Herein, the phrase "unreacted gas discharged from the fuel cell" means at least one gas of the cathode off gas discharged from the fuel cell or the anode off gas discharged from the fuel cell.

According to an eighth aspect of the invention, a fuel cell system is provided that includes: a hydrogen generating device including a hydrogen generator and a combustor, the hydrogen generator being configured to generate a hydrogen-rich fuel gas from a raw material and water and to supply the fuel gas to the fuel cell, and the combustor being configured to heat the hydrogen generator by at least combusting an anode off gas discharged from the fuel cell, and to discharge a combustion exhaust gas; and
a reforming water pump configured to supply, after water in the gas-liquid separator is purified into pure water by a water purifier, the pure water to the hydrogen generator, the gas-liquid separator being according to the seventh aspect of the invention, configured to separate water from at least one gas of the unreacted gas discharged from the fuel cell or the combustion exhaust gas discharged from the combustor.

According to a ninth aspect of the invention, the fuel cell system according to the seventh or eighth aspect of the invention further includes a float sensor including a shaft portion attached to the lid and a water level detection unit enclosed in the side wall, the float sensor being incorporated so as to detect a water level of water in the main body.

With this, the float sensor can be removed easily even in the condition in which water is stored in the main body because the float sensor is mounted to the lid. Thus, the work efficiency in the maintenance for the float sensor is improved. For example, when lukewarm water is stored in the main body, fungi or molds are likely to grow easily. When the fungi or molds clog between the shaft portion and the water level detection unit, the operation of the water level detection unit may be limited and the accuracy of the float sensor may be lowered. In such a case, the fuel cell system in this aspect exhibits advantageous effects of easy maintenance for the float sensor, along with the efficient attaching/removing work of the lid.

Herein below, embodiments of the present invention are described with reference to the drawings. It should be noted that the present invention is not limited by the embodiments.

### (Embodiment 1)

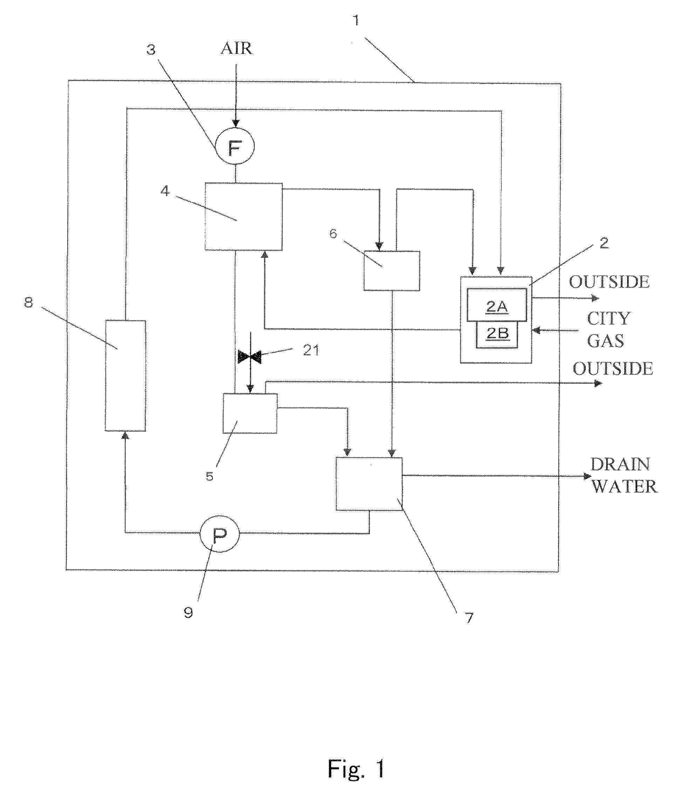

Fig. 1 is a schematic diagram illustrating an example of a fuel cell system of Embodiment 1,

As illustrated in Fig. 1, a hydrogen generator 2 for generating a hydrogen-rich fuel gas from a raw material and water is disposed inside a casing 1 of a fuel cell system 100.

The hydrogen generating device 2 includes a hydrogen generator 2A and a combustor 2B. The hydrogen generator 2A generates a hydrogen-rich fuel gas from a raw material and water and supplies the fuel gas to a fuel cell 4. The combustor 2B heats the hydrogen generator 2A by at least combusting an anode off gas discharged from the fuel cell 4, and discharges a combustion exhaust gas.

The interior of the casing 1 is provided with a fuel cell 4 that generates electric power using a fuel gas obtained by the hydrogen generating device 2 (hydrogen generator 2A) and air supplied by an air pump 3, a cathode gas-liquid separator 5 that separates water from a cathode off gas discharged from the fuel cell 4, an anode gas-liquid separator 6 that separates water from an anode off gas discharged from the fuel cell 4, a condensed water tank 7 that stores condensed water collected from the cathode gas-liquid separator 5 and the anode gas-liquid separator 6, and a reforming water pump 9 that supplies, after the condensed water collected in the condensed water tank 7 is purified into pure water by a water purifier 8, the pure water to the hydrogen generating device 2 (hydrogen generator 2A). As will be described later, it is possible that the combustion exhaust gas from the combustor 2B may be guided into the cathode gas-liquid separator 5 and thereafter discharged outside.

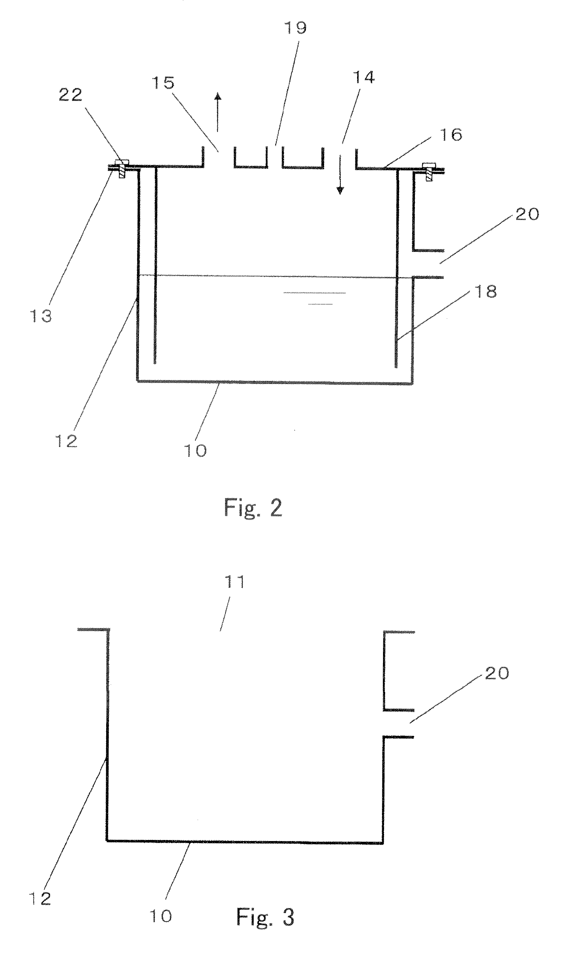

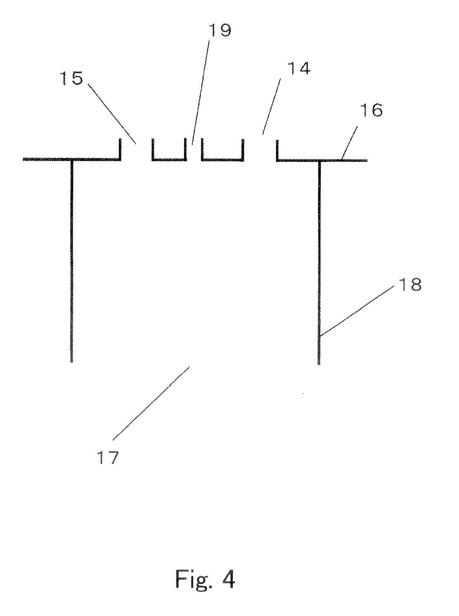

Fig. 2 is a cross-sectional view illustrating an example of a gas-liquid separator of Embodiment 1. Fig. 3 is a cross-sectional view illustrating an example of a main body of the gas-liquid separator of Embodiment 1. Fig. 4 is a cross-sectional view illustrating an example of a lid used for the gas-liquid separator of Embodiment 1, which includes a separating wall.

As illustrated in Figs. 2 to 4, the cathode gas-liquid separator 5 includes: a main body 13 including a bottom face portion 10 and a tubular side wall 12, one end of the side wall 12 being connected to the bottom face portion 10, the other end of the side wall 12 including a first opening 11; a water outlet port 20 provided in the side wall 12; a lid 16 disposed so as to cover the first opening 11 and including a gas inlet port 14 and a gas outlet port 15, and a water feed port 19; and a tubular separating wall 18 disposed inside the side wall 12, one end of the separating wall 18 being connected to the lid 16 , the other end of the separating wall 18 including a second opening 17. The lid 16 and the separating wall 18 may be integrally molded with each other by resin molding process or the like. Alternatively, the lid 16 and the separating wall 18 may be prepared separately in advance and then integrally formed so as to cover the entire seam of them by welding, bonding, or the like.

A gap is provided between the bottom face portion 10 and an end portion on the side of the second opening 17 of the separating wall 18, and a gap is provided between the side wall 12 and the separating wall 18.

Moreover, the lid 16 and the main body 13 are fastened at their periphery portions by an appropriate fastening means (for example, a screw 22). In other words, the junction portion of the main body 13 and the lid 16 is disposed outwardly relative to the separating wall 18 when viewed from a vertical direction. In addition, the first opening 11 is provided so as to open gravitationally upward, and the second opening 17 is configured so as to open gravitationally downward.

Furthermore, the gas inlet port 14 and the gas outlet port 15 are provided inwardly relative to the connected portion of the lid 16 and the separating wall 18, and the water outlet port 20 is provided gravitationally upwardly relative to the end portion on the side of the second opening 17 of the separating wall 18 (in other words, at a location higher with respect to a vertical direction than the end portion on the side of the second opening 17).

The operations and workings of the gas-liquid separator configured in the manner described above will be explained in the following.
(a) When the hydrogen generating device 2 (the hydrogen generator 2A) is supplied with a city gas and pure water supplied from the condensed water tank 7 via a water purifier 8 by the reforming water pump 9, a hydrogen-rich fuel gas is generated. In the hydrogen generating device 2, an excessive fuel gas of the fuel gas supplied to the fuel cell 4 is combusted by the combustor 2B so as to heat water to obtain steam, and the combustion exhaust gas from the combustor 2B is discharged outside. This combustion exhaust gas also contains water. For this reason, it is possible that the combustion exhaust gas discharged from the combustor 2B of the hydrogen generating device 2 may be guided into the cathode gas-liquid separator 5, and water may be separated and recycled from the combustion exhaust gas.
(b) The fuel cell 4 generates electric power using the hydrogen-rich fuel gas as the anode gas and using the air supplied by the air pump 3 as the cathode gas.
(c) The cathode off gas after electric power generation is guided from the gas inlet port 14 of the lid 16 of the cathode gas-liquid separator 5 into the interior of the cathode gas-liquid separator 5. Note that water has been supplied into the main body 13 of the cathode gas-liquid separator 5 by opening a water feed valve 21 in advance so that water is filled to the position at least over the lower end of the separating wall 18 of the lid 16.
(d) The cathode off gas that has entered from the gas inlet port 14 goes into the space formed by the lid 16, the separating wall 18, and the water stored in the main body 13. In this region, water is separated from the cathode off gas, and the water is stored in the main body 13.
(e) The cathode off gas from which water has been removed is discharged out of the casing 1 from the gas outlet port 15 of the lid 16.

In the cathode gas-liquid separator 5, because the lid 16 and the separating wall 18 are integrally molded with each other (or integrally formed with each other using weld, bonding, or the like), there is no leakage at the boundary line between the lid 16 and the separating wall 18. In addition, hermeticity for the cathode off gas is ensured by the space formed by the lid 16, the separating wall 18, and the water stored in the main body 13 (that is, the interior of the main body 13 is made to be a water sealing structure). Thus, the hermeticity at the junction portion of the lid 16 and the main body 13 is unnecessary because the junction portion of the main body 13 and the lid 16 is disposed outwardly relative to the separating wall 18 when viewed from a vertical direction. In other words, because the junction portion of the main body 13 and the lid 16 does not receive the internal pressure of the gas supplied from the gas inlet port 14, it is possible to prevent the gas inside the main body 13 and the gas outside the main body 13 from being mixed with each other.

As a result, the structure of the lid 16 and the main body 13 is allowed to be a seal-less structure, which does not use packing, an O ring, or the like. Therefore, in the cathode gas-liquid separator 5 in which the lid 16 and the main body 13 are separable, it is possible to achieve efficient attaching/removing work of the lid and simplification of the device configuration. Moreover, because of the simplification of the device configuration, the cost of the cathode gas-liquid separator 5 can be reduced.

In addition, the gap is provided between the side wall 12 of the main body 13 and the separating wall 18 of the lid 16. With this, because the gap between the side wall 12 and the separating wall 18 serves as a heat insulation layer, it is possible to suppress the heat dissipation loss resulting from the release of heat of the condensed water stored in the main body 13 to outside of the cathode gas-liquid separator 5. This prevents the temperature drop of the condensed water in the cathode gas-liquid separator 5 and reduces the amount of heating at the time when the condensed water is used by the hydrogen generating device 2. As a result, the operation efficiency of the fuel cell system can be improved.

When operating the system continuously, the water level of the condensed water of the main body 13 gradually rises. However, the condensed water passes through the gap between the separating wall 18 of the lid 16 and the bottom face portion 10 of the main body 13, and the condensed water is discharged from the water outlet port 20 provided in the side wall 12 of the main body 13 into the condensed water tank 7. Thus, the water level in the main body 13 can be kept at a constant level. By discharging the condensed water from the water outlet port 20 in this way, the interior of the main body 13 is prevented from being filled with the condensed water, and the cathode off gas passage is prevented from being clogged.

Moreover, the water level of the condensed water stored in the main body 13 can be changed by selecting the vertical location of the water outlet port 20 provided in the side wall 12 at an appropriate location in an up-down direction. Thus, the upper limit of the water level of the condensed water in the main body 13 can be kept constant at a target water level without using a special device, such as a water level sensor, a discharge valve, and a control unit. Note that the controlling of the lower limit of the water level of the condensed water in the main body 13 will be explained in the later-described modified example.

In addition, the water outlet port 20 is provided gravitationally upward relative to the end portion of the second opening 17 of the separating wall 18 (in other words, at a location higher with respect to a vertical direction than the end portion on the side of the second opening 17). Therefore, even when the condensed water is drained from the water outlet port 20, the water level of the condensed water in the main body 13 stays gravitationally above the end portion on the side of the second opening 17 of the separating wall 18. Thus, the hermeticity of the space formed by the lid 16, the separating wall 18, and the water stored in the main body 13 can be ensured.

At this time, the first opening 11 of the main body 13 is provided so as to open gravitationally upward so that the water surface of the condensed water in the main body 13 becomes horizontal (that is, the opening face of the first opening 11 is orthogonal to the gravitational direction). With this, the distance between the water surface of the condensed water in the main body 13 and the upper end of the side wall 12 is kept constant over the entire circumference of the side wall 12. Therefore, even when the water level of the condensed water in the main body 13 rises, the condensed water in the main body 13 can be prevented from leaking out of the cathode gas-liquid separator 5 from a portion of the upper end of the side wall 12.

In addition, the second opening 17 is provided so as to open gravitationally downward so that the water surface of the condensed water in the main body 13 becomes horizontal (that is, the opening face of the second opening 17 is orthogonal to the gravitational direction). With this, the distance between the lower end of the separating wall 18 provided on the lid 16 and the water surface of the condensed water stored in the main body 13 (i.e., the water level of the condensed water with reference to the lower end of the separating wall 18) becomes equal over the entire circumference of the separating wall 18. Therefore, even when the water level of the condensed water in the main body 13 lowers, the cathode off gas can be prevented from leaking out from a portion of the lower end of the separating wall 18, and the hermeticity of the space formed by the lid 16, the separating wall 18, and the water stored in the main body 13 can be ensured.

Furthermore, because the gas inlet port 14 and the gas outlet port 15 are provided inwardly relative to the junction portion of the lid 16 and the separating wall 18, the cathode off gas passes through the inner side of the separating wall 18. As a result, the side wall 12 and the separating wall 18 serve as heat insulation walls to suppress the heat dissipation amount of the cathode off gas, and the temperature of the cathode off gas can be kept high when the cathode off gas is discharged outside from the casing 1. Therefore, condensation can be prevented in the gas discharge portion of the casing 1.

Although Embodiment 1 describes the cathode gas-liquid separator 5, it is also possible to apply the configuration of the present embodiment to the anode gas-liquid separator 6. Although the cathode gas-liquid separator 5 and the condensed water tank 7 are constructed separately in Embodiment 1, it is also possible to employ the configuration in which the cathode gas-liquid separator 5 also serves as the condensed water tank 7. Furthermore, as stated above, it is also possible that the water contained in the combustion exhaust gas discharged from the hydrogen generating device 2 may be separated and recycled by the cathode gas-liquid separator 5.

### (Modified Example)

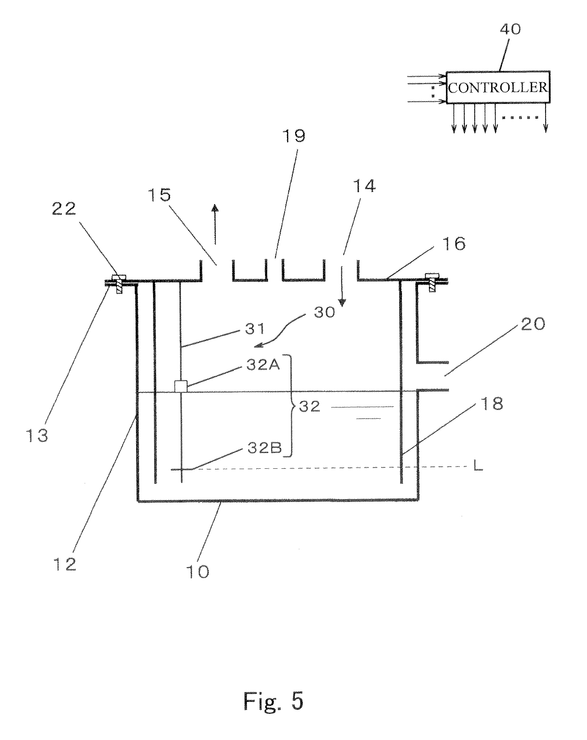

Fig. 5 is a cross-sectional view illustrating an example of a gas-liquid separator of a modified example of Embodiment 1.

As illustrated in Fig. 5, in the gas-liquid separator of the present modified example in the fuel cell system, a float sensor 30 is accommodated inside the side wall 12 so that the lower limit L of the water level of the condensed water in the main body 13 of the gas-liquid separator can be detected.

The float sensor 30 includes a shaft portion 31 being mounted on the lid 16 and extending vertically, and a water level detection unit 32 being mounted to the shaft portion 31 and including a float 32A and a contact point 32B. The float 32A floats on the water surface of the condensed water and moves upward/downward along the shaft portion 31 according to the rise or fall of the water level of the condensed water. The contact point 32B is fixed to the shaft portion 31 at the location corresponding to the lower limit L that is between the water outlet port 20 and the lower end of the separating wall 18.

With this, the controller 40 can detect that the water level of the condensed water has reached the lower limit L based on the detection signal of the float sensor 30.

At this time, the controller 40 may report abnormality of the water level of the condensed water using an appropriate alarm device (not shown), for example, or it may control the open/close operation of the water feed valve 21 (see Fig. 1) so that the water feed valve 21 can be opened. As a result, the gas leakage resulting from water shortage in the gas-liquid separator can be prevented because abnormality of the water level of the condensed water can be identified. Also, the gas leakage resulting from water shortage in the gas-liquid separator can be prevented because an appropriate amount of water can be supplied into the main body 13 from the water feed port 19.

The controller 40 may include, for example, a microprocessor, a memory, and the like, and it may control the operations of various portions of the fuel cell system 100 (see Fig. 1) in addition to the water feed valve 21 by a single controller, or may control the operations of various portions of the fuel cell system 100 by co-operation of a plurality of controllers.

In particular, in this modified example, the float sensor 30 can be removed easily even when water is stored in the main body 13 because the float sensor 30 is mounted to the lid 16. Thus, the work efficiency in the maintenance for the float sensor 30 is improved. For example, when lukewarm water is stored in the main body 13, fungi or molds are likely to grow easily. When the fungi or molds clog between the shaft portion 31 and the water level detection unit 32, the operation of the water level detection unit 32 may be limited and the accuracy of the float sensor 30 may be lowered. In such a case, this modified example exhibits advantageous effects of easy maintenance for the float sensor 30, along with the efficient attaching/removing work of the lid that has been described in Embodiment 1.

Herein, the float sensor 30 that can detect the lower limit L of the water level of the condensed water is shown as an example, but other configurations are possible. For example, it is possible to use a float sensor can detect the upper limit and the lower limit of the water level of the condensed water.

### INDUSTRIAL APPLICABILITY

As described above, the gas-liquid separator according to the present invention can achieve efficient attaching/removing work of the lid and simplification of the device configuration. Therefore, it is applicable to solid polymer electrolyte fuel cells and solid oxide fuel cells.

### REFERENCE SIGNS LIST

- 10: Bottom face portion
- 11: First opening
- 12: Side wall
- 13: Main body
- 14: Gas inlet port
- 15: Gas outlet port
- 16: Lid
- 17: Second opening
- 18: Separating wall
- 19: Water feed port
- 20: Water outlet port

## Claims

1. A gas-liquid separator comprising:
a main body including a bottom face portion and a tubular side wall, one end of the side wall being connected to the bottom face portion, the other end of the side wall including a first opening;
a lid disposed so as to cover the first opening and including a gas inlet port and a gas outlet port; and
a tubular separating wall disposed inside the side wall, one end of the separating wall being connected to the lid, the other end of the separating wall including a second opening, wherein:
a gap is provided between the bottom face portion and an end portion on the side of the second opening of the separating wall; and
the side wall includes a water outlet port provided at a location higher with respect to a vertical direction than the end portion on the side of the second opening.

2. The gas-liquid separator according to claim 1, wherein a junction portion between the main body and the lid is disposed outwardly relative to the separating wall when viewed from the vertical direction.

3. The gas-liquid separator according to claim 1 or 2, wherein a gap is provided between the side wall and the separating wall.

4. The gas-liquid separator according to any one of claims 1 through 3, wherein the first opening is provided so as to open gravitationally upward so that a water surface of water in the main body becomes horizontal.

5. The gas-liquid separator according to any one of claims 1 through 4, wherein the second opening is provided so as to open gravitationally downward so that a water surface of water in the main body becomes horizontal.

6. the gas-liquid separator according to any one of claims 1 through 5, wherein the gas inlet port and the gas outlet port are provided inwardly relative to a junction portion of the lid and the separating wall.

7. A fuel cell system comprising:
a fuel cell configured to generate electric power using a fuel gas and air; and
a gas-liquid separator configured to separate water from unreacted gas discharged from the fuel cell, the gas-liquid separator being the gas-liquid separator according to any one of claims 1 through 6.

8. A fuel cell system comprising:
a hydrogen generating device including a hydrogen generator and a combustor, the hydrogen generator being configured to generate a hydrogen-rich fuel gas from a raw material and water and to supply the fuel gas to the fuel cell, the combustor being configured to heat the hydrogen generator by at least combusting an anode off gas discharged from the fuel cell and to discharge a combustion exhaust gas; and
a reforming water pump configured to supply, after water in the gas-liquid separator is purified into pure water by a water purifier, the pure water to the hydrogen generator,
the gas-liquid separator being the gas-liquid separator according to claim 7, configured to separate water from at least one gas of the unreacted gas discharged from the fuel cell or the combustion exhaust gas discharged from the combustor.

9. The fuel cell system according to claim 7 or 8, further comprising a float sensor including a shaft portion attached to the lid and a water level detection unit enclosed in the side wall, the float sensor being incorporated so as to detect a water level of water in the main body.
